# FASCICULE DE BREVET EUROPEEN

(11) **EP 1 023 144 B1**
(45) Date de publication et mention de la délivrance du brevet: **09.01.2002**
(21) Numéro de dépôt: 98950144.0
(22) Date de dépôt: 15.10.1998
(51) Int. Cl.: B26B 21/44

(54) **BANDE ANTI-FRICTION EXTRUDEE POUR TETE DE RASAGE ET TETE DE RASAGE COMPORTANT UNE TELLE BANDE**
EXTRUDIERTER ANTIREIBUNGSSTREIFEN FÜR RASIERKOPF UND RASIERKOPF MIT EINEM DERARTIGEN STREIFEN
ANTICHAFING STRIP FOR SHAVING EQUIPMENT HEAD AND SHAVING EQUIPMENT HEAD COMPRISING SAME

(30) Priorité: 15.10.1997 FR 9713132
(43) Date de publication de la demande: 02.08.2000
(73) Titulaire: Societe Bic, S.A., 92111 Clichy Cedex (FR)
(72) Inventeur: DUEZ, José, F-62200 Boulogne sur Mer (FR); REBAUDIERES, Jean, F-60200 Compiegne (FR)
(74) Mandataire: Hennion, Jean-Claude
(86) Numéro de dépôt international: FR9802215
(87) Numéro de publication internationale: WO9919124

(56) Documents cités:
- EP-A- 0 854 018
- FR-A- 2 410 541
- US-A- 4 875 287

## Description

La présente invention concerne le domaine du rasage par voie mécanique à l'aide d'un rasoir jetable ; elle concerne plus particulièrement un produit auxiliaire de rasage se présentant sous la forme d'une bande et dénommée bande , qui est fixé sur la tête de rasage de préférence au voisinage des lames de rasage et qui contient au moins un composant d'aide au rasage soluble dans l'eau.

Lors de la mise en oeuvre du rasoir, l'usager plonge la tête du rasage dans l'eau chaude, ce qui a pour effet de rendre accessible et lexiviable une partie du ou des composants d'aide au rasage qui viennent en contact de la peau à chaque passe du rasoir.

Dans le document FR.A.2410541, le produit auxiliaire de rasage proposé est combiné à une structure solide hydrosoluble de micro-capsulage ou microporeuse appelée à retenir le composant d'aide au rasage qui peut être choisi parmi une liste de substances comprenant un lubrifiant appelé à réduire l'effet de frottement entre le rasoir et la peau, un agent appelé à réduire la friction entre le rasoir et la peau, un agent susceptible de modifier la structure du poil, un agent de nettoyage, un agent pharmaceutique , un agent cosmétique et un agent coagulant. Comme exemple de lubrifiant appelé à réduire l'effet de frottement entre le rasoir et la peau, le document FR.A.2410541 cite une huile à base de silicone micro-encapsulée, et comme exemple d'agent appelé à réduire la friction entre le rasoir et la peau ce même document cite un oxyde de polyéthylène ayant un poids moléculaire compris entre 100.000 et 6.000.000, un polyacrylamide non-ionique et un polysaccharide naturel dérivé de substances végétales telles que la gomme de guar.

Dans le document EP.B.0184440, il est prévu de former le produit auxiliaire de rasage, sous forme de bande, par extrusion d'un mélange de matière polymère soluble et insoluble dans l'eau. Ce document cite une liste de polymères solubles dans l'eau comprenant l'oxyde de polyéthylène, la polyvinylpyrrolidone, les polyacrylamides, l'hydroxypropylcellulose, la polyvinylimidazoline et le polyméthacrylate d'hydroxyéthyle. Dans un exemple précis de réalisation, le mélange destiné à former par extrusion ladite bande est composé de 20% en poids de polystyrène insoluble dans l'eau et de 80% en poids d'un mélange d'oxyde de polyéthylène comprenant 60% d'oxyde de polyéthylène "polyox coagulant" de masse moléculaire égale à 5.000.000 et 40% d'oxyde de polyéthylène "polyox WSR N-750" de masse moléculaire égale à 300.000. Aucune explication n'est donnée dans ce document concernant l'intérêt de ce mélange de deux types d'oxydes de polyéthylène, exception faite d'obtenir un poids moléculaire moyen d'environ 3,5 millions pour l'oxyde de polyéthylène du mélange final.

Dans le document EP.B.0550605, le mélange destiné à former par extrusion le produit auxiliaire de rasage, sous forme de bande, contient outre les matériaux polymères insolubles et solubles dans l'eau un agent de poids moléculaire faible amplifiant la libération du matériau polymère soluble dans l'eau constituant le composant d'aide au rasage. Parmi tous les exemples possibles, ce document cite l'oxyde de polyéthylène comme composant d'aide au rasage, lexiviable par l'eau, et le polyéthylène glycol comme agent amplificateur de libération. De manière caractéristique, selon ce document EP.B.0550605, le mélange prévu pour former par extrusion le produit auxiliaire de rasage sous forme d'une bande, comprend 20 à 60% en poids du matériau polymère insoluble, qui formera la matrice de la bande , 20 à 75% en poids du matériau polymère soluble dans l'eau qui constituera le composant d'aide au rasage lexiviable par l'eau et 5 à 20% en poids de l'agent amplificateur de libération. On retrouve strictement dans tous les exemples cités dans ce document le même mélange des deux types d'oxyde de polyéthylène déjà décrits dans le document antérieur EP.B.0184440, à savoir 60% en poids de polyox coagulant et 40% en poids de polyox WSR N-750. Dans les exemples cités, l'agent amplificateur de libération est un polyéthylène glycol dont le poids moléculaire varie entre 4.500 et 20.000. Le but visé par la présence de l'agent amplificateur de libération est de permettre de maintenir une proportion suffisante de polymère insoluble pour garder à la bande extrudée une résistance mécanique adéquate, tant au moment où il est initialement produit et lors de l'assemblage qu'après lixiviation d'une quantité significative du matériau soluble dans l'eau tout en permettant une libération du composant de rasage soluble dans l'eau suffisante pour assurer une assistance de rasage efficace pendant la durée de vie utile totale prévue pour la lame ou les lames.

Dans ce document EP.B.0550605 aucune explication n'est donnée quant aux raisons permettant à certains agents déterminés, de poids moléculaire faible, d'amplifier la libération du composant d'aide au rasage, à savoir le polyéthylène glycol, le méthoxy polyéthylène glycol, la méthylcellulose et le carboxypolyméthylène. Il est à noter que les quatre seuls exemples qui sont cités dans ce document concernent tous le mélange précité d'oxyde de polyéthylène et l'addition de polyéthylène glycol. On peut rappeler que l'oxyde de polyéthylène et le polyéthylène glycol ont la même formule générale, ne se différenciant que par le procédé de fabrication et par leur poids moléculaire moyen. On utilise le terme polyéthylène glycol pour désigner un composé dont le poids moléculaire est généralement inférieur à 20.000. On utilise le terme oxyde de polyéthylène pour désigner un composé ayant un poids moléculaire moyen supérieur à 100.000, sachant qu'il existe une très grande variété de produits proposés sur le marché, ayant comme formule générale celle de l'oxyde de polyéthylène , avec des poids moléculaires moyens de 100.000 à 8.000.000.

Ainsi, selon le demandeur, on peut penser que dans le document EP.BO550605, le polyéthylène glycol est utilisé également comme composant d'aide au rasage, en complément de l'oxyde de polyéthylène à bas poids moléculaire (polyox WSR N-750) de manière à obtenir une libération suffisante de composants d'aide au rasage pendant la durée de vie de la tête de rasage jetable.

Ainsi, l'évolution actuelle dans ce domaine vise à privilégier une libération importante du composant soluble d'aide au rasage, notamment de l'oxyde de polyéthylène de préférence additionné de polyéthylène glycol. Cependant du fait de cette libération importante , ce composant reste présent sur les surfaces de peau déjà rasées et est susceptible de former un film par dessèchement. Pour éviter cet inconvénient , il est nécessaire que l'utilisateur se lave après le rasage. Toutefois, en fonction de la qualité de l'eau disponible , cet enlèvement n'est pas toujours satisfaisant et il peut rester sur la peau une impression collante. Si tout ou partie du composant soluble reste sur la peau, cela peut être source d'irritations notamment pour les peaux sensibles.

Pour pallier ces inconvénients, il a déjà été proposé dans le document EP.B.0321679, une solution qui est de principe différent puisqu'il évite l'utilisation d'un polymère soluble en proposant de mettre en oeuvre, comme agent anti-friction un gel xérophile qui lors de l'absorption d'eau en tant qu'agent de dispersion se transforme en un gel lyophile présentant une très grande aptitude au glissement sur la peau de l'utilisateur et a un coefficient de frottement µ inférieur à 0,25. Par addition d'agent de dispersion , par exemple de l'eau, le gel xérophile se transforme à nouveau en gel lyophile par gonflement, sa surface extérieure devenant glissante et présentant un faible coefficient de frottement. Au cours de cette phase, la substance colloïdale formant le réseau du gel lyophile ne passe pas en solution, ce qui permet d'éviter la formation sur la peau d'un film constitué d'un composant d'aide au rasage extrait de la bande, comme cela était le cas dans les documents précités.

Toutefois, selon l'enseignement de ce document EP.B.0321679, il est nécessaire de rapporter le revêtement formant le gel xérophile sur une bande support en vue de constituer la bande anti-friction proprement dite qui est à placer sur la tête de rasage. En effet les matériaux préconisés pour former le gel xérophile ne résistent pas à des températures permettant d'envisager la fabrication de la bande anti-friction par extrusion.

Le but que s'est fixé le demandeur est de proposer une autre solution, ne mettant pas en oeuvre de gel xérophile, qui permet d'obtenir une bande anti-friction par extrusion tout en privilégiant l'aptitude au glissement sur la peau de l'utilisateur et sans entraîner de risque de formation d'un film de composant soluble sur la peau de celui-ci.

Ce but est parfaitement atteint par la bande anti-friction pour rasoir jetable de l'invention qui , de manière connue, est obtenue par extrusion à partir d'un mélange polymère d'un matériau polymère insoluble, et ,comme matériau polymère soluble, d'oxyde de polyéthylène. De manière caractéristique selon l'invention, ladite bande est caractérisée par un coefficient de frottement dynamique (K_{D}) initial de l'ordre de ou inférieur à 0,2 et par le fait que le mélange à extruder comporte exclusivement , comme oxyde de polyéthylène, un produit ayant un poids moléculaire moyen supérieur à 3,5 millions.

Le demandeur a en effet constaté que la présence d'oxyde de polyéthylène de poids moléculaire plus faible, même en mélange avec de l'oxyde de polyéthylène de poids moléculaire plus élevé, conduisait à une augmentation du coefficient de frottement dynamique.

De plus il s'avère que plus le poids moléculaire de l'oxyde de polyéthylène est élevé, plus sa solubilité dans l'eau diminue. On a donc, avec un oxyde de polyéthylène de poids moléculaire supérieur à 3,5 millions , une libération relativement faible eu égard aux chiffres donnés dans les documents EP.B.184440 et EP.B.650605. Le risque d'irritation de la peau ou de sensation de peau glissante est donc particulièrement diminué voire éliminé de ce fait.

Par ailleurs le demandeur a, lors d'essais comparatifs de rasage, remarqué un autre avantage technique important dans le fait de mettre en oeuvre , dans le mélange, un seul oxyde de polyéthylène de haut poids moléculaire, à savoir de garder une capacité de glissement, pour la bande anti-friction, qui reste sensiblement constante ou évolue relativement peu lors d'une série de rasages, utilisant la même bande. Comparativement , une bande anti-friction comportant de l'oxyde de polyéthylène de plus bas poids moléculaire, présente après deux ou trois rasages une baisse sensible de sa capacité de glissement, ce qui se traduit par une sensation tout-à-fait désagréable pour l'utilisateur.

De préférence , au regard de cet avantage technique, la bande anti-friction est obtenue par extrusion d'un mélange de polystyrène et d'un oxyde de polyéthylène d'un poids moléculaire moyen supérieur à 4 millions.

Un autre problème qu'a cherché à résoudre le demandeur réside dans la fixation de la bande anti-friction sur la tête de rasage. Dans le document FR.A.2410541, la bande est fixée sur la tête de rasage, de préférence dans un logement prévu à cet effet. Aucune indication n'est donnée quant au mode de fixation. Dans le document EP.B.0184440, la bande a un profil particulier, étant bloquée en position par des éléments de structure de la tête de rasage. Cette solution rend plus complexe la fabrication de la tête. Dans le document EP.B.0550605, la bande anti-friction est fixée par une colle dans une partie en creux de la tête de rasage. Cette solution nécessite de mettre en oeuvre une colle à prise particulièrement rapide, si l'on veut obtenir une fabrication à cadence élevée.

Le demandeur s'est proposé de mettre en oeuvre pour la friction de la bande anti-friction sur la tête de rasage la technique bien connue du soudage par ultrasons. Cette technique consiste à créer des conditions de mise en vibration, par l'action d'ultrasons, permettant de créer localement une élévation de température des deux matériaux plastiques en contact en sorte d'obtenir une inter-pénétration localisée de ces deux matériaux.

Or le demandeur a constaté que la mise en oeuvre dans la bande anti-friction d'oxyde de polyéthylène de poids moléculaire supérieur à 3,5 millions permet d'obtenir , par la technique de soudage ultrasons, une soudure de bonne qualité. On désigne comme étant une soudure de bonne qualité entre un premier matériau plastique de base et un matériau plastique rapporté le cas où la rupture de la soudure par contrainte mécanique s'effectue majoritairement au niveau du matériau de base ou rapporté et non pas au niveau de la soudure proprement dite. Il y a en quelque sorte arrachage du matériau au-delà de la zone d'interpénétration des deux matériaux.

Les meilleurs résultats ont été obtenus avec une bande anti-friction réalisée par extrusion d'un mélange de polystyrène et d'un oxyde de polyéthylène d'un poids moléculaire moyen supérieur à 7 millions, fixé par soudure ultrasons sur une portion de tête de rasage en polystyrène.

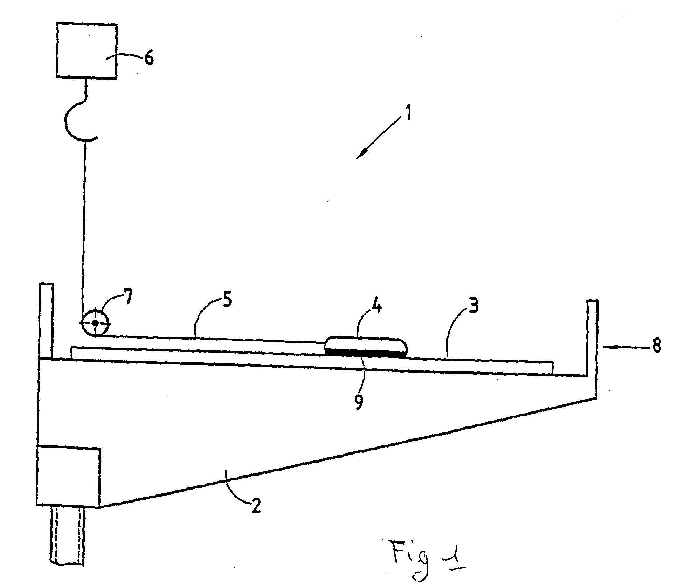

La présente invention sera mieux comprise à la lecture de la description qui va être faite d'un exemple de réalisation de bande anti-friction à faible coefficient de frottement dynamique, réalisée par extrusion d'un mélange de polystyrène et d'oxyde de polyéthylène ayant un poids moléculaire moyen supérieur à 3,5 millions, illustré par le dessin annexé dans lequel la figure unique est une représentation schématique du dispositif d'essai pour la détermination du coefficient de frottement dynamique.

Pour déterminer la glissabilité de la bande anti-friction de l'invention, le demandeur a pris en compte la norme française enregistrée NF T54-112, qu'il a adaptée. Cette norme a pour objet la mesure des coefficients de frottements statique et dynamique des feuilles en plastique lorsqu'elles glissent sur elles-mêmes ou sur d'autres substances. La première feuille en plastique est dans le cas présent constituée par la bande anti-friction de l'invention et la seconde, dénommée ci-après piste de glissement, est un matériau dont les caractéristiques sont proches de celles de la peau, par exemple une feuille de polyuréthanne, un revêtement de polyuréthanne et le polyester (référence du produit 4PE100/B09T, commercialisé par la société CATRY), ou une feuille en mélamine à catalyse acide (commercialisée sous la marque commerciale Velleda) . Bien sûr la valeur précise du coefficient de frottement dynamique est fonction du matériau utilisé, pour la piste de glissement.

Le coefficient de frottement dynamique (K_{D}) est le rapport de la force de traction qu'il faut exercer pour entretenir le glissement l'une sur l'autre de deux surfaces, à la force qui appuie ces deux surfaces l'une contre l'autre. Pour calculer ce coefficient, on mesure la force nécessaire pour amorcer puis entretenir le déplacement, l'une par rapport à l'autre, des deux matériaux en contact, la pression de contact entre ces deux matériaux étant maintenue constante au cours de l'essai.

Le dispositif 1 mis en oeuvre pour la réalisation d'un tel essai est constitué d'un support horizontal 2, qui est destiné à supporter la piste de glissement 3 , par exemple par une feuille en polyuréthanne de longueur 30cm et de largeur 15cm, et d'un patin 4 en acier ayant une masse de 198g, une longueur de 6,35cm et une largeur de 3,4cm. Un échantillon 9 de la bande anti-friction à tester est placé sous le patin 4, en contact avec la piste de glissement 3. Le patin 4 est tracté par un câble 5 relié à un dynamomètre 6, une poulie 7 de renvoi permettant d'obtenir un déplacement horizontal du patin 4. Le support 2 constitue le fond d'une cuve 8 thermostatée dans laquelle se trouve de l'eau chauffée à 42 ° C, en quantité suffisante pour que cette eau forme un film entre la piste de glissement 3 et l'échantillon 9 de bande anti-friction à tester.

On effectue un déplacement rectiligne du patin , portant l'échantillon , sur la piste de glissement à la vitesse de 150 ± 15mm par minute sur une distance de 12cm. On réalise dix essais avec le même échantillon. On mesure la force moyenne nécessaire à l'entretien du déplacement du patin 4. Le coefficient de frottement dynamique (K_{D}) est le rapport de cette force sur le poids de l'ensemble constitué par le patin 4 et l'échantillon 9.

La valeur du coefficient de frottement dynamique (K_{D}) dont il est question est la valeur initiale obtenue lors du premier test. En effet cette valeur évolue, lorsque l'on procède à une série de tests, séparés par une période de séchage de la bande. Il a d'ailleurs été remarqué qu'elle évoluait moins lorsque , à la fin des dix essais permettant d'obtenir une valeur moyenne on procédait à un rinçage abondant de la bande. De même il est préférable de nettoyer voire même remplacer la piste de glissement entre deux tests.

Mettant en oeuvre cette méthode , le demandeur a effectué des essais comparatifs entre les bandes anti-friction, réalisées par extrusion à partir d'un mélange de polystyrène et d'oxyde de polyéthylène de poids moléculaires différents.

Tous les tests réalisés ont montré que la présence dans le mélange d'oxyde de polyéthylène de bas poids moléculaire , notamment de l'ordre de 300.000, seul ou en présence de polyéthylène glycol conduisait à un phénomène de collage, nuisible au glissement.

Par contre, conformément à l'invention, il a été obtenu des coefficients de frottement dynamique initiaux de l'ordre ou inférieurs à 0,2 en mettant en oeuvre des oxydes de polyéthylène d'un poids moléculaire moyen supérieur à 3,5 millions, coefficients caractéristiques d'un bon glissement, sans phénomène de collage.

Des tests comparatifs, plus subjectifs mais plus proches des conditions d'un rasage, ont été mis au point par le demandeur. On colle deux bandes anti-friction que l'on veut comparer sur une plaquette support, les deux bandes étant parallèles et distantes l'une de l'autre de deux à trois centimètres environ. Les tests comprennent deux opérations répétées plusieurs fois successivement puis l'ensemble plusieurs jours de suite : la première opération consiste à plonger la plaquette dans l'eau tiède (de l'ordre de 40-42°C), simulant ainsi le passage du rasoir sous l'eau chaude du robinet ; la seconde consiste à frotter simultanément les deux bandes à l'aide de deux doigts de la même main , simulant ainsi une séquence du rasage. A chaque test sont affectées des durées différentes pour chaque opération. Dans un premier exemple, la première opération dure 15 secondes et la seconde 1 minute, les deux opérations étant réalisées successivement deux fois au total. Dans le second exemple , la première opération dure 5 secondes et la seconde 30 secondes, les deux opérations étant réalisées successivement quatre fois au total. L'ensemble constitué par la répétition de ces deux opérations est réalisé pendant plusieurs jours de suite, par exemple 6 ou 7 jours , simulant la durée de vie du rasoir jetable.

La sensation de glissement perçue simultanément au niveau des deux doigts permet d'affecter un classement relatif des bandes , l'une par rapport à l'autre, en terme de capacité de glissement, et d'apprécier l'écart de glissement entre les deux bandes. En particulier , grâce à ces tests, qui reproduisent de très près les conditions réelles d'un rasage, le demandeur a pu mettre en lumière qu'une bande anti-friction obtenue par extrusion d'un mélange polymère comprenant du polystyrène et un oxyde de polyéthylène du type Alkox 300 a une capacité de glissement qui est toujours supérieure à celui d'une bande du domaine public obtenu dans les mêmes conditions mais avec un mélange d'oxyde de polyéthylène et de polyéthylène glycol ; bien plus il est remarquable que cet écart s'accentue au fur et à mesure des séquences de rasage simulées.

Dans le cas de la bande anti-friction de l'invention il y a une légère diminution de la capacité de glissement, relativement régulière d'un jour sur l'autre , tandis que dans le cas de la bande du domaine public précitée, il y a cette même diminution mais avec, au 3ème ou 4 ème jour, une chute brutale de la capacité de glissement.

Concernant la fixation des bandes anti-friction de l'invention sur les têtes de rasage, le demandeur préconise de mettre en oeuvre la technique de soudage par ultrasons. Afin de vérifier la qualité de la soudure par ultrasons entre le polystyrène et l'oxyde de polyéthylène , des plaquettes de polystyrène ont été soudés sur des plaquettes extrudées à partir d'un mélange de 60% d'oxyde de polyéthylène et 40% de polystyrène. Pour vérifier la qualité de la soudure , la plaquette extrudée à base de polystyrène et d'oxyde de polyéthylène est fixée dans un étau, on se saisit de la plaquette de polystyrène pur sur laquelle on tire jusqu'à rupture. Soit la rupture intervient au niveau de la soudure proprement dite soit la rupture intervient au niveau de la plaquette de polystyrène et d'oxyde de polyéthylène. On considère généralement qu'une soudure de bonne qualité est obtenue lorsque la rupture intervient majoritairement au niveau de la plaquette et non de la soudure.

Le tableau ci-dessous donne les résultats obtenus avec les produits Alkox 160, 240 et 300 précités. Un essai complémentaire a été réalisé avec l'Alkox E 100 dont le poids moléculaire annoncé par le fabricant est compris entre 2,5 et 3 millions. Comme on peut le constater, dans ce dernier cas la qualité de la soudure est moins bonne dans la mesure où toutes les ruptures sont intervenues au niveau de la soudure proprement dite et non de la matière. De plus il y a un écart très important quant à la force moyenne en kilogramme qui a été nécessaire pour obtenir cette rupture avec la bande obtenue à partir de l'Alkox E 100 par rapport à celles obtenues avec les Alkox E 160 , E 240 et E 300, dont les résultats sont très proches les uns des autres. Le meilleur résultat quant au coefficient de frottement dynamique et quant à la soudabilité par ultrasons est constitué par la bande anti-friction réalisée par extrusion d'un mélange de 40% en poids de polystyrène et 60 % en poids d'oxyde de polyéthylène ayant un poids moléculaire compris entre 7 et 8 millions, ladite bande étant soudée par ultrasons sur une tête de rasage en polystyrène.

| Type d'oxyde de polyéthylène | F moyenne (kg) | nombre de rupture au niveau de la soudure (sur 4 échantillons) |
|---|---|---|
| Alkox E 100 | 12,9 | 4/4 |
| Alkox E 160 | 20,8 | 2/4 |
| Alkox E 240 | 21,6 | 1/4 |
| Alkox E 300 | 21,67 | 0/4 |

La bande anti-friction préférée de l'invention, qui permet d'avoir les meilleurs résultats tant en terme de capacité de glissement et de durabilité de cette capacité qu'en terme de qualité de fabrication, est une bande qui est obtenue par extrusion à partir d'un mélange polymère qui comporte à raison de l'ordre de 30% du polystyrène et à raison de l'ordre de 70% un oxyde de polyéthylène dont le poids moléculaire moyen est supérieur à 7 millions. La masse extrudée est plus compacte qu'avec des oxydes de polyéthylène de poids moléculaire inférieur, ce qui permet d'avoir un profil de la bande plus précis et plus régulier.

Dans un mode préféré de réalisation, mettant en oeuvre l'Alkox 300 (poids moléculaire moyen entre 7 et 8 millions), le mélange comprenait 66,5% d'Alkox 300, 32% de polystyrène et 1,5% d'additifs, notamment de pigments colorés.

La bande anti-friction de l'invention peut bien sûr contenir, en plus des matériaux polymères caractéristiques précités, des additifs de rasage , notamment tels que ceux cités dans le document FR.2.410.541 : agents de nettoyage, agents pharmaceutiques , agents cosmétiques et agents coagulants.

## Revendications

1. Bande anti-friction pour rasoir jetable obtenue par extrusion à partir d'un mélange polymère comprenant un matériau polymère insoluble et l'oxyde de polyéthylène, **caractérisée par** un coefficient de frottement dynamique (K_{D}) initial de l'ordre de ou inférieur à 0,2 et par le fait que le mélange à extruder comporte exclusivement , comme oxyde de polyéthylène , un produit ayant un poids moléculaire moyen supérieur à 3,5 millions.

2. Bande anti-friction selon la revendication 1 **caractérisée en ce qu'**elle est obtenue par extrusion à partir d'un mélange comprenant du polystyrène et de l'oxyde de polyéthylène d'un poids moléculaire moyen supérieur à 4 millions.

3. Bande anti-friction selon la revendication 2 **caractérisée en ce qu'**elle est obtenue par extrusion d'un mélange de polystyrène et d'un seul oxyde de polyéthylène d'un poids moléculaire supérieur à 7 millions.

4. Bande anti-friction selon la revendication 3 **caractérisée en ce qu'**elle est obtenue par un mélange de l'ordre de 30% de polystyrène et de l'ordre de 70% d'un seul oxyde de polyéthylène d'un poids moléculaire supérieur à 7 millions.

5. Bande anti-friction selon la revendication 4 **caractérisée en ce qu'**elle est obtenue un mélange de 32% de polystyrène, 66,5% d'un oxyde de polyéthylène d'un poids moléculaire compris entre 7 et 8 millions et de 1,5% d'additifs, notamment pigments colorés.

6. Tête de rasage sur laquelle est fixée par soudure ultrasons une bande anti-friction selon l'une des revendications 1 à 5.

7. Tête de rasage selon la revendication 6 , dans laquelle la portion sur laquelle est fixée la bande anti-friction est en polystyrène.

## Patentansprüche

1. Antifriktions-Band für einen Einweg-Rasierer, das hergestellt wurde durch Extrudieren einer Polymermischung, die ein unlösliches polymeres Material und Polyethylenoxid umfasst, **gekennzeichnet durch** einen anfänglichen dynamischen Reibungskoeffizienten (K_{D}) in der Größenordnung von oder kleiner als 0,2 und **dadurch**, dass die zu extrudierende Mischung als Polyethylenoxid ausschließlich ein Produkt mit einem mittleren Molekulargewicht von mehr als 3,5 Millionen enthält.

2. Antifriktions-Band nach Anspruch 1, **dadurch gekennzeichnet, dass** es hergestellt wurde durch Extrudieren einer Mischung, die Polystyrol und Polyethylenoxid mit einem mittleren Molekulargewicht von mehr als 4 Millionen umfasst.

3. Antifriktions-Band nach Anspruch 2, **dadurch gekennzeichnet, dass** es hergestellt wurde durch Extrudieren einer Mischung von Polystyrol und eines einzigen Polyethylenoxids mit einem Molekulargewicht von mehr als 7 Millionen.

4. Antifriktions-Band nach Anspruch 3, **dadurch gekennzeichnet, dass** es hergestellt wurde aus einer Mischung in der Größenordnung von 30 % Polystyrol und in der Größenordnung von 70 % eines einzigen Polyethylenoxids mit einem Molekulargewicht von mehr als 7 Millionen.

5. Antifriktions-Band nach Anspruch 4, **dadurch gekennzeichnet, dass** es hergestellt wurde durch Extrudieren einer Mischung von 32 % Polystyrol, 66,5 % eines Polyethylenoxids mit einem Molekulargewicht zwischen 7 und 8 Millionen und 1,5 % Additiven, insbesondere Farbpigmenten.

6. Rasierkopf, auf dem durch Ultraschallschweißen ein Antifriktions-Band nach einem der Ansprüche 1 bis 5 fixiert worden ist.

7. Rasierkopf nach Anspruch 6, bei dem der Abschnitt, auf dem das Antifriktions-Band fixiert ist, aus Polystyrol ist.

## Claims

1. An anti-friction strip for a discardable razor, the strip being obtained by extruding a polymer mixture comprising an insoluble polymer material and polyethylene oxide, the strip being **characterised by** an initial coefficient of dynamic friction (K_{D}) of the order of or less than 0.2, and by the fact that the mixture to be extruded comprises, as its polyethylene oxide, only a substance whose mean molecular weight is greater than 3.5 million.

2. An anti-friction strip according to claim 1, **characterised in that** it is obtained by extruding a mixture comprising polystyrene and a polyethylene oxide having a mean molecular weight greater than 4 million.

3. An anti-friction strip according to claim 2, **characterised in that** it is obtained by extruding a mixture of polystyrene and a single polyethylene oxide having a molecular weight greater than 7 million.

4. An anti-friction strip according to claim 3, **characterised in that** it is obtained by a mixture of about 30% polystyrene and about 70% of a single polyethylene oxide having a molecular weight greater than 7 million.

5. An anti-friction strip according to claim 4, **characterised in that** it is obtained by a mixture of 32% polystyrene, 66.5% polyethylene oxide having a molecular weight lying in the range 7 million to 8 million, and 1.5% additive, in particular coloured pigments.

6. A shaving head having an anti-friction strip according to one of claims 1 to 5 fixed thereto by ultrasonic welding.

7. A shaving head according to claim 6, in which the portion on which the anti-friction strip is fixed is made of polystyrene.
